Europäisches Patentamt

European Patent Office

Office européen des brevets

(11) Publication number : **0 496 245 A2**

(12) **EUROPEAN PATENT APPLICATION**

(21) Application number : **92100455.2**

(22) Date of filing : **13.01.92**

(51) Int. Cl.⁵ : **H04N 1/32**

(30) Priority : **24.01.91 JP 22656/91**

(43) Date of publication of application :
**29.07.92 Bulletin 92/31**

(84) Designated Contracting States :
**DE FR GB**

(71) Applicant : **TOKYO ELECTRIC CO., LTD.**
**6-13, 2-chome, Nakameguro**
**Meguro-ku Tokyo (JP)**

(72) Inventor : **Kudo, Yoichi**
**98-6, Sawaji**
**Mishima-shi, Shizuoka-ken (JP)**

(74) Representative : **Weber, Joachim, Dr. et al**
**Hoefer, Schmitz, Weber, Patentanwälte**
**Ludwig-Ganghofer-Strasse 20**
**W-8022 Grünwald/München (DE)**

(54) **Facsimile equipment having a telephone function.**

(57) A telephone function-equipped facsimile equipment connected to ISDN stores the telephone number of a called party connected through a dial call in a memory control unit (9). The main control unit (1) calls up the called party's telephone number from the memory control unit (9), when a facsimile communication start key (3a) is operated during call, and makes a call setup, conducts a facsimile communication with the called party over a B channel other than an engaged B channel when that B channel is available, and makes a facsimile communication with the same called party, through a packet switched data network, over a D channel when both the B channels are not available.

F I G. 1

Jouve, 18, rue Saint-Denis, 75001 PARIS

The present invention relates to a telephone function-equipped facsimile equipment connected to an ISDN (integrated services digital network).

ISDN includes a plurality of information channels called B channels and a signal channel called a D channel and supports speech, data, image, etc., communication in an integrated fashion. A plurality of facsimile equipments are connected to ISDN.

In the case where, for example, facsimile equipments A and B are connected to ISDN, when the facsimile equipment A is placed in a call setup against the facsimile equipment B through off-hook and dial call, the facsimile equipment B sends "alert and connect" response to the facsimile equipment A. The facsimile equipment A sends a "connect acknowledge" to the facsimile equipment B and enables a message communication with the facsimile equipment B over a B1 channel established.

When the facsimile equipment A conducts a facsimile communication with the facsimile equipment B during their message communication over the B1 channel, the facsimile equipment A is once placed in an on-hook state and disengaged. Then the facsimile equipment A again performs a facsimile communication start operation against the facsimile equipment B.

However, if such a facsimile communication start operation is performed by the facsimile equipment A after an associated engaged telephone has been cut off, a cumbersome operation is required on the facsimile equipment side.

Published Unexamined Japanese Patent Application No. 2-166862 discloses a telephone function-equipped facsimile equipment allowing image and speech communication in a multiplexed mode in which a called party's telephone number is stored in a telephone number memory during a facsimile communication and, by turning on a specific key, a telephone connection is created against a called party, during a facsimile communication, on the basis of the telephone number in the telephone number memory.

In the facsimile equipments disclosed in the Japanese Patent Application above, when a telephone connection is to be made to the called party during a facsimile communication, it is not necessary to perform such a cumbersome operation as interrupting the facsimile communication once. If, on the other hand, a telephone line has already been engaged, it is not possible to obtain a telephone connection over that telephone line.

It is accordingly the object of the present invention to provide a facsimile equipment which, without the need of turning off an "engaged" telephone circuit, can conduct a facsimile communication with the same called party over a B channel and, even if any of these B channels is not available, can make a positive facsimile communication, through a packet switched data network, over a D channel.

According to the present invention, there is provided a telephone function-equipped facsimile equipment connected to ISDN, which comprises memory means for storing the telephone number of a called party connected through a dial call, a facsimile communication start key for starting a facsimile communication, and calling means for calling up the called party's telephone number from the memory means, when the facsimile communication start key is turned on, and means for retrieving whether or not another B channel is available instead of a B channel "engaged" through a dial call, and means for conducting a facsimile communication with the same called party over the B channel when that B channel is available and means for making a facsimile communication with the "engaged" called party, through a packet switched data network, over a D channel.

In this facsimile equipment system, by turning on the facsimile communication start key during a call over one of the B channels, one facsimile equipment can conduct a facsimile communication with the called party now engaged over an additional B channel available. When, on the other hand, said additional B channel is engaged, then the facsimile equipment makes a facsimile communication with the engaged called party, through a packet switched data network, over a D channel.

This invention can be more fully understood from the following detailed description when taken in conjunction with the accompanying drawings, in which:

Fig. 1 is a block diagram showing a circuit arrangement of a facsimile equipment according to one embodiment of the present invention;

Fig. 2 is a view showing a communication sequence in the present facsimile equipment;

Fig. 3 is a view showing a communication sequence in the present facsimile equipment; and

Fig. 4 is a flowchart showing communication control by a main control unit in the present facsimile equipment A.

One embodiment of the present invention will be explained below with reference to the accompanying drawings.

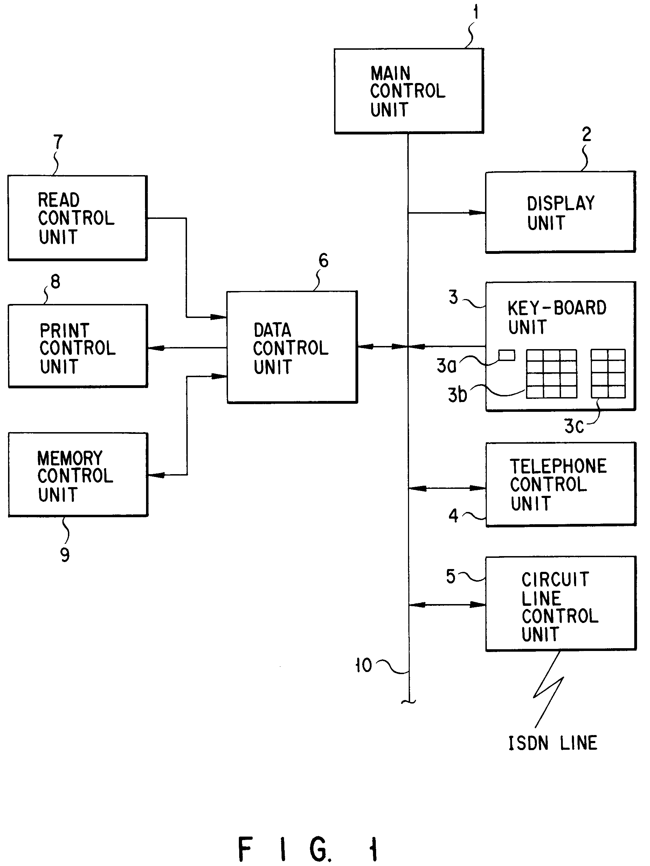

Fig. 1 is a block diagram showing an arrangement of a facsimile equipment. A main control unit 1 constitutes a control unit body. A display unit 2 displays a called party's telephone number, facsimile communication mode, messages, etc. A key-board unit 3 includes a facsimile communication start key 3a, called party's telephone number entering key 3b, abbreviated dialing key 3c, etc. A telephone control unit 4 controls its telephone set for speech control to be made thereby. A circuit line control unit 5 is connected to an integrated services digital network (ISDN) to control the ISDN circuit lines for data communication. A data control unit 6 controls a read control unit 7 for reading out a document, print control unit 8 for printing/recording data, and memory control unit 9 for temporarily storing reception data and called party's telephone number. The data control unit 6 is adapted to, for example, encode and decode communication data.

The main control unit 1, display unit 2, key-board unit 3, telephone control unit 4, circuit line control unit 5 and data control unit 6 are connected together by means of a bus line 10.

A plurality of such facsimile equipments are connected to ISDN.

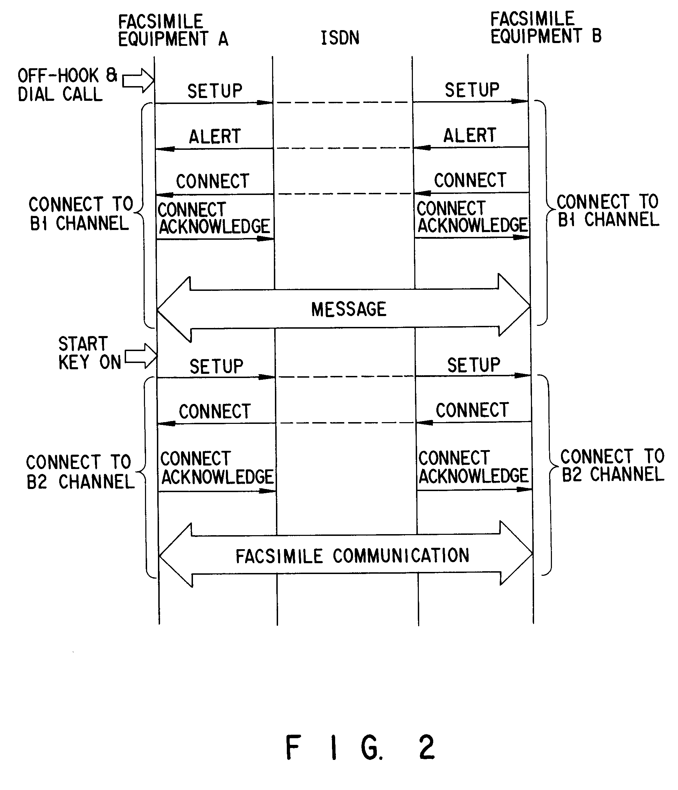

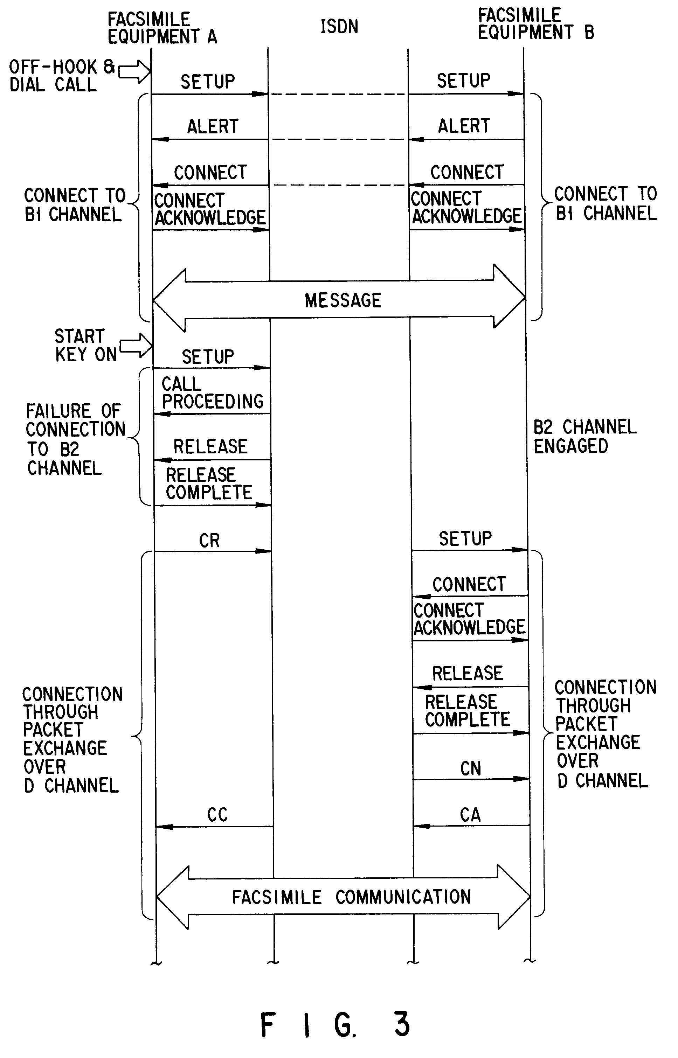

Let it be assumed that, for example, facsimile equipments A and B are connected to ISDN and that the facsimile equipment A communicates with the facsimile equipment B. Then the communication control of the facsimile equipments is performed based on a sequence as shown in Figs. 2 and 3.

That is, in the sequence as shown in Fig 2, when the facsimile equipment A is placed in an off-hook state and a dial call is made to the facsimile equipment B, then a call setup is made against the facsimile equipment B on the basis of a D channel setup procedure. When this is done, the facsimile equipment B makes an "alert and connect" response to the facsimile equipment A. The facsimile equipment A sends a "connect acknowledge" to the facsimile equipment B to establish a B1 channel connection.

Thus a message is started between the facsimile equipments A and B over the B1 channel. At that time, the memory control unit 9 in the facsimile equipment A temporarily stores the called party's telephone number to which a dial call is now being made.

When a facsimile communication start key 3a in the key-board unit 3 in the facsimile equipment A is turned ON during the call, the facsimile equipment A calls up the called party's telephone number from the memory control unit 9 to make a call setup for facsimile communication to the facsimile equipment B. If, at this time, there is an additional B channel (B2 channel) available in the facsimile equipment B, the facsimile equipment B makes a "connect" response to the facsimile equipment A. The facsimile equipment A acknowledges that available B2 channel through the "connect" response from the facsimile equipment B, sends a corresponding "connect acknowledge" to the facsimile equipment B and starts a facsimile communication with the facsimile equipment B.

In the sequence as shown in Fig. 3, when the facsimile equipment A makes a dial call to the facsimile equipment B after off-hook, it makes a call setup against the facsimile equipment B on the basis of a D channel call setup procedure. By so doing, the facsimile equipment B makes an "alert and connect" response to the facsimile equipment A. The facsimile equipment A makes a "connect acknowledge" against the facsimile equipment B to establish a B1 channel connection.

In this way, a call is started between the facsimile equipments A and B over the B1 channel. At that time, the memory control unit 9 in the facsimile equipment A temporarily stores the called party's telephone number to which a dial call is being made.

Heretofore, the sequence above is the same as the sequence as shown in Fig. 2.

When the facsimile communication start key 3a in the key-board unit 3 in the facsimile equipment A is turned ON during a call, the facsimile equipment A calls up the called party's telephone number from the memory control unit 9 to make a call setup for facsimile communication to the facsimile equipment B. At that time, if the B2 channel is engaged in the facsimile equipment, ISDN transmits a "call-proceeding and release" request to the facsimile equipment A.

The facsimile equipment A acknowledges a failure of a connection to the B2 channel and transmits a "releasecomplete" signal to the facsimile equipment B. Then the facsimile equipment A achieves a connection for packet communication over a D channel. First, the facsimile equipment A transmits a call request CR for packet communication to the facsimile equipment B. By so doing, ISDN makes a call setup against the facsimile equipment B. The facsimile equipment B transmits a "connect" response to ISDN and then ISDN transmits a "connect acknowledge" to the facsimile equipment B. The facsimile equipment B transmits a "request to release the D channel for packet communication" to ISDN. ISDN transmits a "release-complete" signal to the facsimile equipment B and, at the same time, terminating "callnotify (CN)" signal for allowing a start of the D channel packet communication. Upon receipt of the CN signal, the facsimile equipment B transmits a terminating "call-accept (CA) signal to ISDN. By so doing, ISDN transmits a "connect-complete (CC) signal to the facsimile equipment A, thus completing a D channel/packet connection. In this way, the facsimile equipment A starts a facsimile communication to the facsimile equipment B through a packet switched data network.

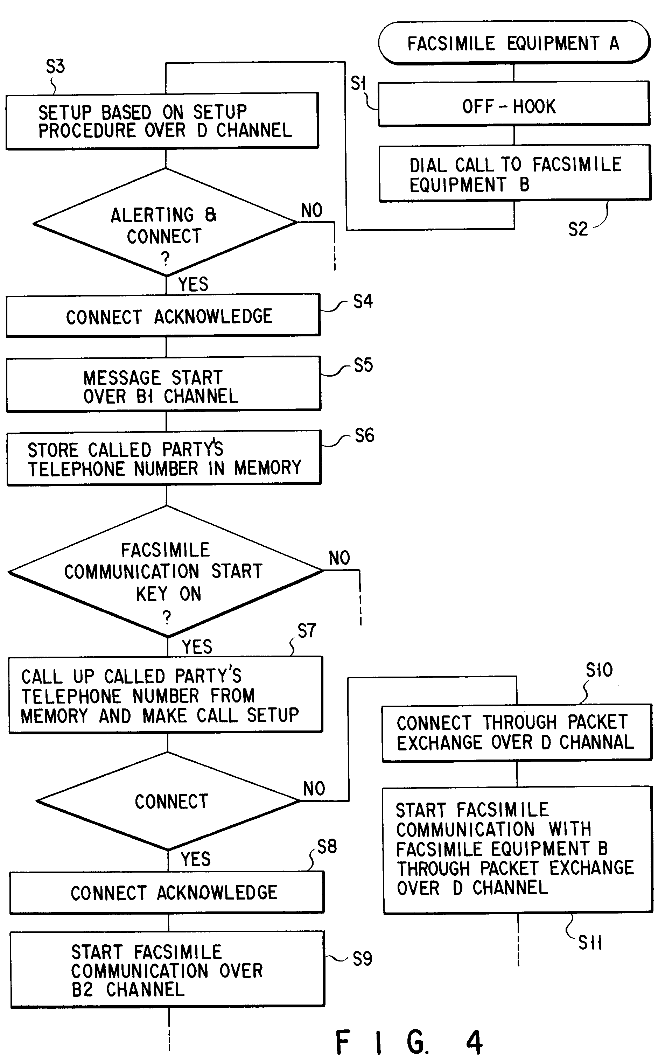

In order to implement a facsimile communication sequence from the facsimile equipment A to the facsimile equipment B, the main control unit 1 in the facsimile equipment A performs communication control as shown in a flowchart in Fig. 4. Step S1 places the facsimile equipment A in an off-hook state and step S2 makes a dial call to the facsimile equipment B. Step S3 makes a call setup on the basis of a D channel setup procedure. The facsimile equipment A is placed in readiness for a "alert and connect" response from the facsimile equipment B. Step S4 transmits "connect acknowledge" to the facsimile equipments B upon receipt of the "alert and connect" response. Then step S5 starts a call over a B1 channel and step S6 stores the called party's telephone number in a memory by means of the memory control unit 9.

When, in this state, the facsimile communication start key 3a is turned ON, step S7 calls up the called party's telephone number from the memory and makes a call setup against the facsimile equipment B during a call. The facsimile equipment A is placed in readiness for a "connect" response from the facsimile equipment B. Step SB transmits a "connect acknowledge" upon receipt of that "connect" response and step S9 enables the facsimile equipment A to commence a facsimile communication with the facsimile equipment B.

When there is no "connect" response from the facsimile equipment B in a ready state, step S10 performs a D channel packet connection proceeding and step S11 enables the facsimile equipment A to start a facsimile communication with the facsimile equipment B through the D channel packet.

Through communication control as set out above, the facsimile equipment A, upon being placed in facsimile communication with a "now engaged" facsimile equipment B, can make a facsimile communication with the facsimile equipment B, over a B2 channel other than the B1 channel now engaged against the same facsimile equipment B, by turning on the facsimile communication start key 3a with the associated telephone set kept in an "engaged" state.

Even if the facsimile equipment B is now being operated, the facsimile equipment A can conduct a facsimile communication with the facsimile equipment B, through a packet switched data network, over the D channel.

In this way, the facsimile equipment A has only to start a facsimile communication with the same facsimile equipment B, while keeping an associated telephone set "engaged", simply by turning on the facsimile communication start key 3a and is done so without the need to place the "now engaged" telephone set in the on-hook state and then perform a facsimile communication start operation against the same called party. It is thus possible to provide an improved operability to the facsimile equipment involved.

The facsimile communication can conduct a facsimile communication over the B2 channel other than the B1 now engaged. Even if the B2 channel is being engaged, a facsimile communication can be carried out, through a packet switched data network, over the D channel. It is thus possible to positively make a facsimile communication with the associated telephone set kept in an engaged state.

## Claims

1. A telephone function-equipped facsimile equipment connected to an integrated services digital network (ISDN) having a D channel and a plurality of B channels, comprising:

    memory means for storing a called party's telephone number connected through a dial call; and

a facsimile communication start key for starting a facsimile communication,

    characterized in that said facsimile equipment includes.

    calling means for calling up the telephone number of the called party from the memory means, when the facsimile communication start key is operated during a call over one of those B channels of ISDN;

    means for making a corresponding call setup through a dial call made based on the telephone number of the called party and for retrieving whether or not there is any available additional B channel;

    means for making a facsimile communication with the called party through the additional B channel, when said additional B channel is available through a retrieval process during a call; and

    means for conducting a facsimile communication with the same called party, through a packet switched, over the D channel when said additional B channel is not available.

2. The telephone function-equipped facsimile equipment according to claim 1, characterized in that said ISDN has two B channels.

F I G. 1

FACSIMILE
EQUIPMENT A     ISDN     FACSIMILE
EQUIPMENT B

OFF-HOOK &
DIAL CALL

SETUP        SETUP

ALERT        ALERT

CONNECT        CONNECT

CONNECT TO
B1 CHANNEL

CONNECT
ACKNOWLEDGE        CONNECT
ACKNOWLEDGE

CONNECT TO
B1 CHANNEL

MESSAGE

START
KEY ON

SETUP        SETUP

CONNECT        CONNECT

CONNECT TO
B2 CHANNEL

CONNECT
ACKNOWLEDGE        CONNECT
ACKNOWLEDGE

CONNECT TO
B2 CHANNEL

FACSIMILE COMMUNICATION

F I G. 2

6

FACSIMILE
EQUIPMENT A      ISDN      FACSIMILE
EQUIPMENT B

OFF-HOOK &
DIAL CALL

SETUP ⟶ — — — → SETUP ⟶

ALERT ⟵ — — — ⟵ ALERT

CONNECT ⟵ — — — ⟵ CONNECT

CONNECT TO
B1 CHANNEL

CONNECT
ACKNOWLEDGE ⟶    CONNECT
ACKNOWLEDGE ⟶

CONNECT TO
B1 CHANNEL

⟵================ MESSAGE ================⟶

START
KEY ON

SETUP ⟶

CALL
PROCEEDING ⟵

FAILURE OF
CONNECTION
TO B2
CHANNEL

RELEASE ⟵

RELEASE
COMPLETE ⟶

B2 CHANNEL
ENGAGED

CR ⟶     SETUP ⟶

CONNECT ⟵

CONNECT
ACKNOWLEDGE ⟶

RELEASE ⟵

RELEASE
COMPLETE ⟶

CONNECTION
THROUGH
PACKET
EXCHANGE
OVER
D CHANNEL

CN ⟶

CONNECTION
THROUGH
PACKET
EXCHANGE
OVER
D CHANNEL

CC ⟵     CA ⟵

⟵================ FACSIMILE COMMUNICATION ================⟶

F I G.  3

7

F I G. 4

8